# EUROPÄISCHE PATENTSCHRIFT

(11) **EP 1 747 929 B1**
(45) Veröffentlichungstag und Bekanntmachung des Hinweises auf die Patenterteilung: **19.10.2016**
(21) Anmeldenummer: 06015426.7
(22) Anmeldetag: 25.07.2006
(51) Int. Cl.: B60K 6/20

(54) **Hybridantrieb für ein Kettenfahrzeug**
Drive unit for a track vehicle
Unité de propulsion pour véhicule à chenilles

(30) Priorität: 30.07.2005 DE 102005035824
(43) Veröffentlichungstag der Anmeldung: 31.01.2007
(73) Patentinhaber: Renk Aktiengesellschaft, 86159 Augsburg (DE)
(72) Erfinder: Döbereiner, Rolf, Dr., 86153 Augsburg (DE)
(74) Vertreter: Schlosser, Stefan

(56) Entgegenhaltungen:
- US-A- 4 890 508
- US-A- 5 509 491
- US-A- 5 931 757
- US-A- 5 980 410
- US-A1- 2001 009 147
- US-A1- 2003 205 422
- US-A1- 2005 109 549
- US-B1- 6 478 705

## Beschreibung

Die Erfindung betrifft einen Antrieb für ein Kettenfahrzeug gemäß den Merkmalen des Patentanspruchs 1.

Für den Antrieb von Personenkraftfahrzeugen sind sogenannte Hybridantriebe allgemein bekannt. Auf der Suche nach Kraftstoffeinsparmöglichkeiten sind Fahrzeuge mit Elektromotoren als Fahrantrieb entstanden. Der elektrische Strom für den Fahrantrieb wird dabei von einem Generator geliefert, der durch einen Verbrennungsmotor angetrieben wird. Es sind Konzepte bekannt, bei welchen die gesamte mechanische Energie des Verbrennungsmotors in elektrische umgewandelt wird und über einen Elektromotor wieder in mechanische Bewegungsenergie zurückverwandelt wird. Andere Konzepte verwenden einen Teil der mechanischen Energie des Verbrennungsmotors direkt für den Antrieb des Fahrzeugs und wandeln den verbleibenden Teil in elektrische Energie um. Die elektrische Energie kann einerseits über einen Elektromotor beim Antrieb eingesetzt oder in einer Batterie gespeichert werden. Aus der Batterie kann das Fahrzeug dann unabhängig vom Verbrennungsmotor Antriebsleistung für den elektrischen Fahrmotor ziehen.

Aus der DE 37 28 171 C2 ist eine elektro-mechanische Antriebsanlage für ein Vollkettenfahrzeug bekannt. Die Leistung eines Verbrennungsmotors wird durch einen Generator in elektrische Energie umgewandelt und über Elektromotoren wieder als mechanische Antriebsleistung verwendet. Hierzu ist ein elektrischer Fahrmotor vorgesehen, der eine Zentralwelle antreibt, welche jeweils über eine Differentialgetriebeanordnung mit den beiden Kettenantriebsrädern verbunden ist. Für die Lenkung des Kettenfahrzeugs ist ein elektrischer Lenkmotor vorgesehen, der über eine Nullwelle in gegensätzlicher Richtung in die Differentialgetriebeanordnungen eintreibt.

Aus der nicht vorveröffentlichten DE 10 2004 009030 ist ein paralleler Hybridantrieb für Kettenfahrzeuge bekannt, bei dem der beispielsweise als Starter/Generator ausgeführte Elektromotor zusätzlich bei Bedarf für den Fahrantrieb genutzt werden kann. Oft ist bei solchen Anordnungen die Leistung des Elektromotors wesentlich kleiner als die des Verbrennungsmotors. Sie werden auch als "Mild Hybrid Layout" bezeichnet.

Aus der US 5,980,410 ist ein Antrieb für einen Radlader oder einen Raupentraktor bekannt, bei dem eine Brennkraftmaschine und zwei elektrische, als Generator oder Elektromotor betreibbare Maschinen über ein dreistufiges Planetenüberlagerungsgetriebe miteinander kuppelbar sind, um eine stufenlos verstellbare Übersetzung des Antriebs zu realisieren. Aus der US 5,931,757, der darauf aufbauenden US 6,478, 705 B1 und der US 2003/0205422 A1 sind ähnliche Antriebe für Lastkraftwagen bekannt.

Den Stand der Technik nach dem Oberbegriff des Anspruchs 1 stellt hier der US2005/109549 dar.

Die Aufgabe der Erfindung ist es, den bekannten Hybridantrieb für ein Kettenfahrzeug zu verbessern.

Diese Aufgabe wird erfindungsgemäß durch die Merkmale des Patentanspruchs 1 gelöst.

Ausgestaltungen der Erfindung sind Gegenstände der abhängigen Ansprüche 2 bis 4.

Durch einen erfindungsgemäßen Antrieb kann im Kettenfahrzeug in vorteilhafter Weise die Versorgung der Verbraucher mit elektrischer Leistung sichergestellt werden. Bei militärischen Fahrzeugen, wie beispielsweise Kampfpanzern können zum Beispiel elektrische Waffen mit Strom versorgt werden.

Durch Zufuhr elektrischer Energie aus einem Energiespeicher, kann mit einem erfindungsgemäßen Antrieb die Höchstgeschwindigkeit eines Kettenfahrzeugs gegenüber einem herkömmlich angetriebenen Kettenfahrzeug vorteilhaft erhöht werden. Ebenso kann die größtmögliche Beschleunigung vorteilhaft vergrößert werden und es sind auch geräuschlose Schleichfahrten mit einem erfindungsgemäßen Kettenfahrzeug möglich.

Beim Bremsen kann über die Elektromaschinen in vorteilhafter Weise Energie in Batterien oder andere elektrische, mechanische oder hydraulische Energiespeicher rückgespeist werden.

Bei geschlossener Trennkupplung kann ein erfindungsgemäßes Kettenfahrzeug vorteilhaft angeschleppt werden. Dabei kann die für den Startvorgang benötigte elektrische Energie durch die Elektromaschinen erzeugt werden.

Bei einem erfindungsgemäßen Antrieb übernimmt eine Hybrideinheit die Funktion eines Drehmomentwandlers herkömmlicher Automatikgetriebe, so dass das Schaltgetriebe des Fahrzeugs deshalb besonders vorteilhaft auch ohne Drehmomentwandler ausgeführt werden kann.

Da die Drehzahl des Verbrennungsmotors durch die Hybrideinheit eines erfindungsgemäßen Antriebs nicht direkt an die Drehzahl des Gangschaltgetriebes gekoppelt ist, ist es möglich, den Verbrennungsmotor im Bereich seines besten Wirkungsgrades bzw. auf der Trajektorie seines besten Wirkungsgrades zu betreiben. Dabei ist eine vorteilhafte Dimensionierung des Verbrennungsmotors auf bestimmte, verbrauchs- und emissionsoptimierte Lastpunkte möglich.

Weitere Merkmale und Vorteile ergeben sich aus den Unteransprüchen in Verbindung mit der Beschreibung.

Die Erfindung wird nachfolgend anhand der zugehörigen schematischen Zeichnung näher erläutert. Die
- Fig. 1: zeigt eine erste beispielhafte Ausführungsform des erfindungsgemäßen Antriebs und
- Fig. 2: stellt eine weitere erfindungsgemäße Ausführungsform des Antriebs dar.

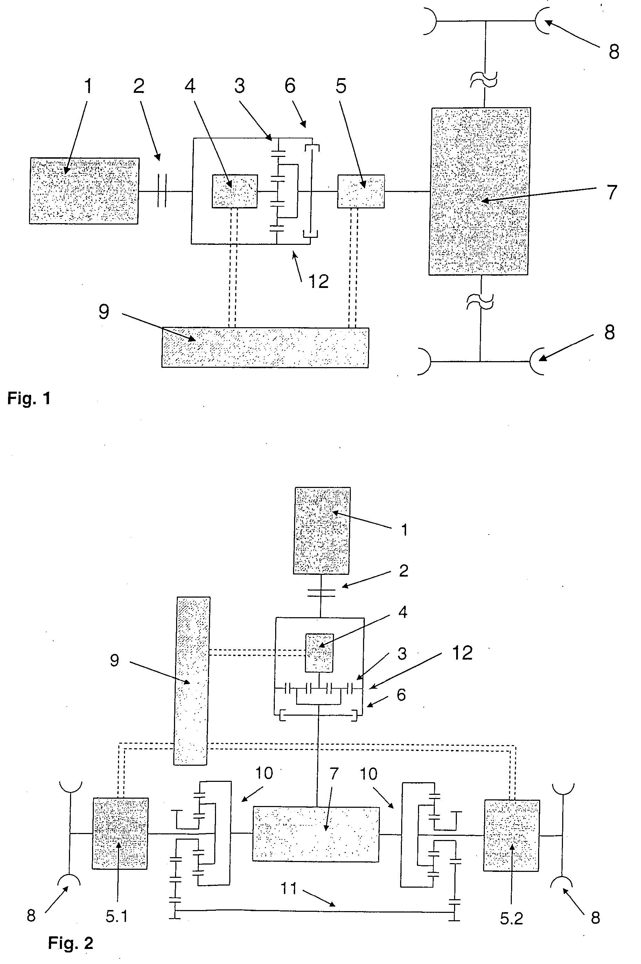

Die Figur 1 zeigt einen Verbrennungsmotor 1, der über eine Kupplung 2 trennbar mit dem Hohlrad 3 einer sogenannten Hybrideinheit 12 verbunden ist, die als Überlagerungsgetriebe wirkt. Die Hybrideinheit 12 wird durch ein Planetengetriebe dargestellt, wobei ein erster Elektromotor 4 mit dem Sonnenritzel und ein weiterer Elektromotor 5 mit dem Abtriebssteg bzw. Planetenträger des Planetengetriebes verbunden ist. Als Elektromotoren 4, 5 sind elektrische Maschinen vorgesehen, die wahlweise als Elektromotor oder als Generator betrieben werden können. Die elektrischen Maschinen 4, 5 werden nachfolgend entsprechend ihrer jeweiligen Betriebsweise als Generator oder Elektromotor bezeichnet.

Statt einem Verbrennungsmotor 1 kann auch eine Gasturbine oder eine andere Wärmekraftmaschine zur Erzeugung von mechanischer Leistung vorgesehen werden.

Die Wärmekraftmaschine und die elektrischen Maschinen können auch an anderen als den oben beschriebenen Eingangselementen des Planetengetriebes angeschlossen werden.

Die erste elektrische Maschine 4 oder / und die weitere elektrische Maschine 5 können im Generatormodus im Fahrzeug vorgesehene Energiespeicher aufladen. Dies können elektrische Energiespeicher 9, wie beispielsweise Batterien sein, und/oder mechanische Energiespeicher, wie z.B. Schwungradspeichereinrichtungen.

Die Hybrideinheit 12 kann mit einer Überbrückungskupplung 6 blockiert werden. Die Hybrideinheit 12 ist mit einem Schaltgetriebe 7 verbunden, in welchem ein Lenküberlagerungsgetriebe und mindestens eine Fahrzeugbremse integriert sind. Das Lenküberlagerungsgetriebe besteht aus mindestens einer Differentialgetriebeanordnung, durch welche eine Lenkdrehzahl eines Lenkantriebs auf mindestens ein Kettenantriebsrad überlagert werden kann, so dass die Fahrketten an den beiden Fahrzeugseiten unterschiedliche Fahrgeschwindigkeiten erzeugen und das Fahrzeug eine Kurve fährt.

Die Kettenräder 8 sind an den Abtrieben des Schaltgetriebes 7 direkt oder über Zwischengetriebe angeschlossen. Hier kann auch eine mechanische Bremse integriert werden.

Bei geschlossener Kupplung 2 kann der Verbrennungsmotor 1 über den ersten Elektromotor 4 gestartet werden. Die elektrische Maschine 5 steht dabei still. Die Kupplung 2 lässt sich vorzugsweise auch unter Last schalten.

Bei stehendem Fahrzeug und laufendem Verbrennungsmotor 1 sowie geschlossener Kupplung 2 läuft die erste Elektromaschine 4 im Generatormodus mit der aus der Übersetzung des Planetengetriebes resultierenden Drehzahl um. Die weitere Elektromaschine 5 steht still und im Schaltgetriebe 7 ist der benötigte Gang eingelegt. Zum Anfahren wird der erste Elektromotor 4 bei gleich bleibendem Drehmoment verlangsamt und der weitere Elektromotor 5 beginnt in entsprechender Weise zu drehen. Das Fahrzeug fährt an. Gleichzeitig wird die mit dem ersten Elektromotor 4 erzeugte Energie zum Betrieb des weiteren Elektromotors 5 benutzt. Dadurch wird die optimale Umsetzung der vom Verbrennungsmotor bereitgestellten Leistung ermöglicht. Die Hybrideinheit 12 übernimmt dabei die Funktion des Drehmomentwandlers herkömmlicher Automatikgetriebe. Das Schaltgetriebe 7 kann deshalb vorteilhaft auch ohne Drehmomentwandler ausgeführt werden.

Zur Erhöhung der Beschleunigung und der Höchstgeschwindigkeit können die, aus einem elektrischen Energiespeicher 9 gespeisten, Elektromotoren 4 und 5 bei geschlossener Kupplung 2 zusätzlich zum Verbrennungsmotor 1 weitere Antriebsleistung in den Antrieb einbringen.

Durch eine Überbrückungskupplung 6 kann die Hybrideinheit 12 blockiert werden, d.h. das Hohlrad 3 und der Planetenträger werden starr miteinander gekoppelt und alle Wellen des Überlagerungsgetriebes 12 können nur noch gemeinsam drehen. Die Elektromotoren 4 und 5 rotieren dann mit der Drehzahl des Verbrennungsmotors und können synchron wie bei parallelen Hybridantrieben betrieben werden.

Während den Lastschaltvorgängen im Schaltgetriebe 7 kann die Überbrückungskupplung 6 geöffnet werden. Bei unveränderter Drehzahl des Verbrennungsmotors 1 kann die dem durchgeschalteten neuen Gang entsprechende Eintriebsdrehzahl am Schaltgetriebe 7 über die Elektromotoren 4 und 5 vorteilhaft schnell eingestellt werden. Für die Drehzahlanpassung des Verbrennungsmotors 1 steht damit ein längerer Zeitraum zur Verfügung.

Die elektrischen Maschinen 4 und 5 sind vorzugsweise so ausgelegt, dass sie im Generatorbetrieb die Stromversorgung des Fahrzeugs und der installierten elektrischen Verbraucher, wie z.B. auch elektrische Waffen bei Kampfpanzern, sicherstellen.

Beim Abbremsen kann die Bewegungsenergie des Kettenfahrzeugs über die Generatoren 4 und / oder 5 in vorteilhafter Weise in elektrische Energie umgewandelt und der elektrische Energiespeicher 9 geladen werden. Es ist auch vorteilhaft weitere mechanische und/oder hydraulische Energiespeicher vorzusehen, die beim Bremsen durch die Bewegungsenergie des Fahrzeugs beim ausrollen oder bei Bergabfahrt aufgeladen werden können.

Bei geschlossener Trennkupplung 2 kann der Verbrennungsmotor 1 eines erfindungsgemäßen Kettenfahrzeugs vorteilhaft angeschleppt werden. Die für den Startvorgang benötigte elektrische Energie kann dabei durch die Generatoren 4 und / oder 5 erzeugt werden. Die Überbrückungskupplung 6 ist dabei geschlossen.

Da die Drehzahl des Verbrennungsmotors durch die Hybrideinheit nicht direkt an die Drehzahl des Gangschaltgetriebes 7 gekoppelt ist, ist es möglich, den Verbrennungsmotor im Bereich seines besten Wirkungsgrades bzw. auf der Trajektorie seines besten Wirkungsgrades zu betrieben. Dabei ist eine vorteilhafte Dimensionierung des Verbrennungsmotors auf bestimmte, verbrauchs- und emissionsoptimierte Lastpunkte möglich.

Die elektrischen Maschinen 4 und 5 sind vorzugsweise so ausgelegt, dass ein Verbrennungsmotor mit kleinerer Leistung in das Hybridfahrzeug integriert werden kann, als das bei gleichen Fahrleistungen in einem konventionellen Fahrzeug nötig wäre.

Der bekannte Vorteil Diesel-elektrischer Antriebe, den Verbrennungsmotor mit Generator in beliebiger Lage unabhängig von der Anordnung des Getriebes im Fahrzeug zu platzieren, kann bei der vorliegenden Erfindung dadurch umgesetzt werden, dass der Verbrennungsmotor bzw. die Verbrennungsmotoren über Kardanwellen mit dem Fahrantrieb verbunden werden. Des gleichen können anstelle von Verbrennungsmotoren Gasturbinen vorgesehen werden.

Aufgrund des instationären Betriebs während der Fahrt können die Elektromotoren 4 und 5 hoch überlastbar ausgeführt werden und damit vorteilhaft klein bauen.

Bei einer weiteren Ausführungsvariante der Erfindung wird die Funktion der weiteren Elektromaschine 5 in die Abtriebsachse des Schaltgetriebes 7 integriert. Seine Funktion übernehmen zwei Elektromotoren 5.1 und 5.2, die auch für das Lenken verwendet werden. Beim Lenken wird an Elektromotor 5.1 und 5.2 eine unterschiedliche Drehzahl eingestellt. Das regenerative Lehkprinzip mit Leistungsfluss von der kurveninneren zur kurvenäußeren Seite wird über die Lenkdifferentiale 10 und eine sie verbindende Nullwelle 11 gewährleistet.

Bei einer weiteren Ausführungsform der Erfindung wird kein elektrischer Energiespeicher 9 benötigt, weil eine der Elektromaschinen 4 oder 5 als Generator arbeitet. Die dabei erzeugte elektrische Energie wird direkt an die als Elektromotor arbeitende zweite Elektromaschine weitergegeben und in Drehzahl und Drehmoment umgewandelt. Alle Elektromotoren können aus einem geregelten elektrischen Zwischenkreis über Leistungselektroniken betrieben werden.

### Bezugszeichenliste

- 1: Verbrennungsmotor/Gasturbine
- 2: Kupplung
- 3: Hohlrad der Hybrideinheit
- 4: Elektromotor 1 der Hybrideinheit
- 5: Elektromotor 2 der Hybrideinheit
- 5.1: Elektromotor 2 der Hybrideinheit, links
- 5.2: Elektromotor 2 der Hybrideinheit, rechts
- 6: Überbrückungskupplung der Hybrideinheit
- 7: Gangschaltgetriebe
- 8: Kettenrad
- 9: Elektrischer Energiespeicher
- 10: Lenkdifferential
- 11: Nullwelle
- 12: Hybrideinheit

## Patentansprüche

1. Antrieb für ein Kettenfahrzeug mit einer Antriebswelle, die zwei Kettenantriebsräder (8) antreibt und mindestens einer Differentialgetriebeanordnung innerhalb eines Lenküberlagerungsgetriebes, durch welche eine Lenkdrehzahl eines Lenkantriebs auf mindestens ein Kettenantriebsrad überlagerbar ist, sodass Fahrketten an Fahrzeugseiten unterschiedliche Fahrgeschwindigkeiten erzeugen, wobei die Antriebswelle mit mindestens einer erste elektrischen Maschine (4, 5, 5.1, 5.2) in Antriebsverbindung steht, welche als Generator oder Elektromotor betreibbar ist, und die Abtriebswellen einer Brennkraftmaschine (1) und mindestens die erste elektrischen Maschine (4, 5, 5.1, 5.2) über ein Überlagerungsgetriebe (12) miteinander kuppelbar sind, wobei
das Überlagerungsgetriebe (12) als ein die Elemente Hohlrad (3), Sonnenrad und Planetenträger aufweisendes Planetengetriebe ausgebildet ist, **dadurch gekennzeichnet dass** die Abtriebswelle der Brennkraftmaschine (1) über das Hohlrad (3) mit dem Überlagerungsgetriebe (12) gekuppelt ist, die erste elektrische Maschine (4) über ein Sonnenrad mit dem Überlagerungsgetriebe (12) gekuppelt ist,
nach einer ersten Alternative eine weitere elektrische Maschine (5) mit einem Planetenträger des Überlagerungsgetriebes (12) sowie mit einer Eingangswelle eines Schaltgetriebes (7) verbunden ist oder nach einer zweiten Alternative ein Planetenträger des Überlagerungsgetriebes (12) mit einer Eingangswelle eines Schaltgetriebes (7) verbunden ist und jedem Kettenantriebsrad (8) eine weitere elektrische Maschine (5.1, 5.2) zugeordnet ist, die jeweils über die Differentialgetriebeanordnung mit dem Schaltgetriebe (7) in Antriebsverbindung steht, das Überlagerungsgetriebe (12) mittels einer Überbrückungskupplung (6) derart blockierbar ist, wobei
zum Ausführen von Lastschaltvorgängen im Schaltgetreibe (7) die Überbrückungskupplung (6) geöffnet ist,
zum Anschleppen der Brennkraftmaschine (1) die Überbrückungskupplung (6) geschlossen ist.

2. Antrieb nach Anspruch 1, **dadurch gekennzeichnet, dass** die Abtriebswelle der Brennkraftmaschine (1) über eine vorzugsweise unter Last schaltbare Kupplung (2) an das Überlagerungsgetriebe (12) an- oder abkuppelbar ist.

3. Antrieb nach einem der vorhergehenden Ansprüche, **dadurch gekennzeichnet, dass** mindestens ein elektrischer Energiespeicher (9) vorgesehen ist, der durch die elektrischen Maschinen (4, 5, 5.1, 5.2) im Generatorbetrieb aufladbar ist.

4. Antrieb nach einem der vorhergehenden Ansprüche, **dadurch gekennzeichnet, dass** die elektrischen Maschinen (4, 5, 5.1, 5.2) als elektrische Bremsen einsetzbar sind und die Bewegungsenergie des Kettenfahrzeugs beim Ausrollen oder bei Bergabfahrt in elektrische Energie umwandeln, mit welcher der oder jeder elektrische Energiespeicher (9) aufladbar ist.

## Claims

1. A drive for a track-type vehicle with a driveshaft, which drives two track drive wheels (8) and at least one differential gear arrangement within a steering superimposition transmission, by way of which a steering rotational speed of a steering drive can be superimposed on at least one track drive wheel so that driving tracks on vehicle sides generate different travelling speeds, wherein the driveshaft is in drive connection with at least one first electric machine (4, 5, 5.1, 5.2) which can be operated as generator or electric motor, and the output shafts of an internal combustion engine (1) and at least the first electric machine (4, 5, 5.1, 5.2) can be coupled to one another by way of a superimposition transmission (12), wherein the superimposition transmission (12) is designed as a planetary gear set comprising the elements internal gear (3), sun gear and planet carrier, **characterized in that** the output shaft of the internal combustion engine (1) is coupled to the superimposition transmission (12) by way of the internal gear (3), the first electric machine is coupled to the superimposition transmission (12) by way of a sun gear,
according to a first alternative a further electric machine (5) is connected to a planet carrier of the superimposition transmission (12) and to an input shaft of a manual transmission (7) or according to a second alternative a planet carrier of the superimposition transmission (12) is connected to an input shaft of a manual transmission (7) and each track drive wheel (8) is assigned a further electric machine (5.1, 5.2) which in each case is in drive connection with the manual transmission (7) by way of the differential gear arrangement,
the superimposition transmission (12) can be blocked by means of a bridging clutch (6) in such a manner, wherein
for performing power shift operations in the manual transmission (7) the bridging clutch (6) is opened,
for tow-starting the internal combustion engine (1) the bridging clutch (6) is closed.

2. The drive according to claim 1, **characterized in that** the output shaft of the internal combustion engine (1) can be coupled to or decoupled from the superimposition transmission (12) by way of a preferentially power-shiftable clutch (2).

3. The drive according to any one of the preceding claims, **characterized in that** at least one electric energy storage unit (9) is provided, which can be recharged by the electric machines (4, 5, 5.1, 5.2) in generator mode.

4. The drive according to any one of the preceding claims, **characterized in that** the electric machines (4, 5, 5.1, 5.2) can be employed as electric brakes and convert the movement energy of the track-type vehicle while rolling to a halt or when travelling downhill into electric energy, with which the or each electric energy storage unit (9) can be recharged.

## Revendications

1. Entraînement pour un véhicule à chenille comportant un arbre d'entraînement, qui entraîne deux roues de transmission de chenille (8) et au moins un dispositif de transmission différentielle à l'intérieur d'une transmission à superposition de direction, par l'intermédiaire de laquelle une vitesse de rotation de direction d'une transmission de direction peut être superposée sur au moins une roue de transmission de chenille, de sorte que les chenilles sur les côtés du véhicule génèrent des vitesses de véhicule différentes, dans lequel l'arbre d'entraînement est en liaison opérationnelle avec au moins une première machine électrique (4, 5, 5.1, 5.2), qui peut être exploitée comme générateur ou moteur électrique, et les arbres d'entraînement d'un moteur à combustion interne (1) et au moins la première machine électrique (4, 5, 5.1, 5.2) peuvent être couplés les uns aux autres par l'intermédiaire d'une transmission à superposition (12), dans lequel la transmission à superposition (12) est conçue comme une transmission planétaire présentant des éléments d'engrenage creux (3), engrenage solaire et support de planétaire, **caractérisé en ce que** l'arbre de sortie du moteur à combustion interne (1) est couplé par l'intermédiaire de l'engrenage creux (3) avec la transmission à superposition (12), la première machine électrique (4) est couplée par l'intermédiaire d'un engrenage solaire avec la transmission à superposition (12),
selon une première variante un machine électrique supplémentaire (5) est reliée avec un support de planétaire de la transmission à superposition (12) ainsi qu'avec un arbre d'entrée d'une boîte de vitesses (7) ou selon une deuxième variante un support de planétaire de la transmission à superposition (12)est relié avec un arbre d'entrée d'une boîte de vitesses (7) et une machine électrique supplémentaire (5.1, 5.2) est coordonnée à chaque engrenage de transmission à chenille, laquelle est respectivement en liaison d'entraînement par l'intermédiaire du dispositif de transmission différentielle avec la boîte de vitesses (7),
la transmission à superposition (12) peut être bloquée au moyen d'un embrayage à pontage (6), dans lequel
pour effectuer des processus de commutation de charge dans la boîte de vitesses (7) l'embrayage à pontage (6) est ouvert,
pour forcer le démarrage du moteur à combustion interne (1), l'embrayage de pontage (6) est ouvert.

2. Entraînement selon la revendication 1, **caractérisé en ce que** l'arbre de sortie du moteur à combustion interne (1) peut être couplé ou découplé par l'intermédiaire d'un embrayage (2) commutable de préférence sous charge sur la transmission à superposition (12).

3. Entraînement selon une des revendications précédentes, **caractérisé en ce que** au moins un accumulateur d'énergie électrique (9) est prévu, qui peut être chargé par l'intermédiaire de la machine électrique (4, 5, 5.1, 5.2) en fonctionnement de générateur.

4. Entraînement selon une des revendications précédentes, **caractérisé en ce que** les machines électriques (4, 5, 5.1, 5.2) peuvent être employés comme des freins électriques et l'énergie de mouvement du véhicule à chenille en roue libre ou en descente de montage est convertie en énergie électrique, avec laquelle le ou chaque accumulateur d'énergie (9) électrique peut être chargé.
